# EUROPEAN PATENT SPECIFICATION

(11) **EP 2 119 901 B1**
(45) Date of publication and mention of the grant of the patent: **13.11.2013**
(21) Application number: 07800728.3
(22) Date of filing: 20.08.2007
(51) Int. Cl.: F02M 27/06, F02M 37/22, F02M 35/024, B01D 39/00

(54) **ENVIRONMENT PROTECTIVE AND ENERGY SAVING TYPE FILTER FOR INTERNAL COMBUSTION ENGINE**
UMWELTSCHUTZ- UND ENERGIESPARFILTER FÜR VERBRENNUNGSMOTOR
FILTRE DE TYPE ÉCONOMISEUR D'ÉNERGIE ET PROTECTEUR DE L'ENVIRONNEMENT POUR MOTEUR À COMBUSTION INTERNE

(30) Priority: 29.01.2007 CN 200720103379 U; 29.01.2007 CN 200720103380 U
(43) Date of publication of application: 18.11.2009
(73) Proprietor: Beijing Unifly Scientific & Technology Co., Ltd., Beijing 100 007 (CN)
(72) Inventor: CUI, Qingxiang, Beijing 100007 (CN); WANG, Jiutian, Beijing 100007 (CN)
(74) Representative: Maiwald Patentanwalts GmbH
(86) International application number: PCT/CN2007/002507
(87) International publication number: WO 2008/092320

(56) References cited:
- CN-C- 1 240 463
- CN-Y- 2 898 344
- GB-A- 2 374 558
- JP-A- 2005 016 372
- JP-A- 2005 194 952
- JP-A- 2005 320 926
- US-A1- 2005 199 541
- US-A1- 2005 199 541

## Description

### TECHNICAL FIELD

The present invention relates to technology of engine device, in particular, to an environment protective and energy saving type filter for internal combustion engine.

### BACKGROUND ART

At present, pollution caused by vehicle exhaust emission in large and medium-sized cities has been a concern of the whole society. Imperfect combustion of the fuel is the main reason that vehicle exhaust emission pollutes the environment. Among various factors affecting the combustion of fuels, the fuel and air supplied to the engine is of vital importance. Due to the agglomeration phenomenon among molecules, namely, the larger molecular groups normally formed by air and fuel molecules hinder complete mixing of fuel and oxygen, lower the combination probability of fuel and oxygen molecule and thereby reduce the combustion efficiency of the fuel. The mixed gas owing to the incomplete combustion discharges quickly to the environment and becomes the main composition of the dangerous smoke.

There have been several types of technology related to improving combustion efficiency of the fuel raised in the world, including oxygen-enhanced combustion technology, ion combustion technology, radiation activation technology and so on. The mentioned methods solved the problem of incomplete combustion of the fuel mainly by physical or chemical approach.

The U.S. patent document USP20040056208A1 described that a material technology by which far infrared radiation and negative ion can be produced simultaneously was used to activate water or natural gas to improve the combustion of fuels. Moreover, activation apparatus of which the key materials are mainly bioceramic, and ceramic products sintered by oxides such as silicon oxide or aluminum oxide was manufactured. However, the complicated fabrication apparatuses and high cost restricted wide application thereof.

The U.S. patent document USP4885065 involved a reaction apparatus producing electrons, ions, and neutral particles to improve or strengthen combustion. The U.S. patent document USP2005126550 disclosed a technology which can produce ozone and negative ions getting into internal combustion engine to improve combustion by adopting 2.8 kV~5.0 kV alternating current. The above-mentioned technology can not be used widely due to great electricity power consumption.

The Chinese patent ZL02216771.4 disclosed a far infrared radiation fuel activation apparatus including a main body and an activator, wherein, the main body is located in the combustion lines through which the fuel flows, and the activator installed in the main body is used for fuel flowing to contact. Moreover, the activator composed of some superfine biochemistry ceramic particles is capable of radiating far infrared ray of which wavelength range is about 3-20µm to activate the fuel. However, the superfine ceramic particles with grain diameter below 0.3µm used as activator are expensive and difficult to reproduce.

The Chinese patent application CN1587185A disclosed a ceramic material with functions of activating liquid fuel molecules and combustion supporting, the preparation method and application thereof. The material is made mainly in form of energy-saving mask stuck on the external surface of the fuel inlet and air inlet of an automotive engine. Infrared ray in the product in use needs to pass through the pipe wall, which weakens the activation effect to the air.

JP-A-2005194952 reports an air cleaner element. A filter is arranged between an outer cylinder body and an inner cylinder body and having mountain parts and valley parts alternately formed in a circumference direction and filtering air flowing in from openings formed on the outer cylinder body. An air activating body having an activated carbon fiber enclosed in a bag is fixed on a plate part formed inside of the filter and between the mountain part and the valley part.

### CONTENT OF THE INVENTION

An object of the present invention as defined in appended claims is to provide an environment protective and energy saving type filter apparatus for internal combustion engine, to overcome the shortcomings in prior art.

In order to achieve the above mentioned object, the following technical solution is adopted:
an environment protective and energy saving type filter apparatus for internal combustion engine, comprising a filter paper apparatus, and a far infrared radiation energy saving strap being provided on the filter paper apparatus.

The filter paper apparatus includes an accordion filter paper cylinder with the far infrared radiation energy saving strap twined on the external surface, and two ends of the accordion filter paper cylinder are provided with an upper end cover and a bottom end cover respectively.

The accordion filter paper cylinder is made up of evenly arranged sheet filter material, and a layer of metallic filter mesh is covered on the internal surface of the accordion filter paper cylinder.

The environment protective and energy saving type filter apparatus for internal combustion engine, further comprises an inner filter cylinder installed inside the accordion filter paper cylinder.

The inner filter cylinder and the accordion filter paper cylinder are made up of evenly arranged sheet filter material, and each of the internal and external surfaces thereof is covered with a layer of metallic filter mesh.

The filter paper apparatus is constructed as a rectangular solid by evenly arranged sheet filter material.

Four sides of one surface of the filter paper apparatus are provided with rubber ring.

The filter paper apparatus comprises filter paper winding around a central axle hole, and the filter paper overlaps the far infrared radiation energy saving strap, winding together around the central axle hole.

The far infrared radiation energy saving strap includes four layers, the outermost layer and the innermost layer are sealing layers, and two middle layers are a carrier layer and a functional layer mixed by far infrared radiation ceramic powder and binding agent, respectively.

The material of the carrier layer comprises porous material including carbon-felt, activated carbon carbon-felt, high-temperature bamboo-charcoal carbon-felt, organic fiber product or porous aerated resin.

### BRIEF DESCRIPTION OF THE DRAWINGS

Fig.1 is a tridimensional structural diagram of the apparatus according to the first embodiment in the invention;
Fig.2 is a tridimensional structural diagram of the apparatus according to the second embodiment in the invention;
Fig.3 is a tridimensional structural diagram of the apparatus according to the third embodiment in the invention;
Fig.4 is a tridimensional structural diagram of the apparatus according to the fourth embodiment in the invention.

Wherein, 1 : Upper end cover; 2: accordion filter paper cylinder; 3: bottom end cover; 4: far infrared radiation energy saving strap; 5: inner filter cylinder; 6: rubber ring; 7: inner bottom of the cylinder; 8: centric oil outlet; 9: metallic filter mesh; 20: filter paper apparatus; 60: rubber ring; 80: central axle hole; 90: cylindrical shell; 100: filter paper; 110: oil inlet.

### DETAILED DESCRIPTION OF THE PREFERRED EMBODIMENTS

While the invention will be described with respect to the following embodiments, the scope of the invention will not be limited by the embodiments.

Regarding the above-mentioned problems existed in the prior art, the present invention, starting from air-intake system of an internal combustion engine, achieves an efficient combustion of fuel by activation technology about oxygen molecules in the air and fuel molecules based on the combustion principle, facilitates complete combustion, and greatly reduces vehicle exhaust emission, therefore it is energy-conserving and environment-protective.

There is provided an environment protective and energy saving type filter apparatus for internal combustion engine in the invention, which comprises filter paper apparatus 20 and a far infrared radiation energy saving strap 4 provided on the filter paper apparatus 20. Wherein, the far infrared radiation energy saving strap includes four layers, the outermost layer and the innermost layer are sealing layers, and two middle layers are a carrier layer and a functional layer mixed by far infrared radiation ceramic powder and binding agent (resin or rubber), respectively, which are manufactured by processes of curing, molding, etc. The material of the carrier layer comprises porous material with a certain permeability including carbon-felt, activated carbon carbon-felt, high-temperature bamboo-charcoal carbon-felt, organic fiber product, porous aerated resin and the like. The carrier layer fixes the far infrared functional ceramic material to ensure that the external surface of the filter is covered with far infrared, so as to activate each fuel and air molecule adequately. This kind of simple filter apparatus can be used as a filter element of an internal combustion engine. The filter apparatus 20 may be an accordion filter paper cylinder, a rectangular solid filter paper apparatus, filter papers winding around a central axle hole, or an accordion filter paper cylinder with an inner filter cylinder inside. The filter apparatus for internal combustion engine in the invention may be any applicable form, and is not limited to the specific forms provided in the invention. Four applications of the present invention will be described in conjunction with the following four preferred embodiments.

### Example 1

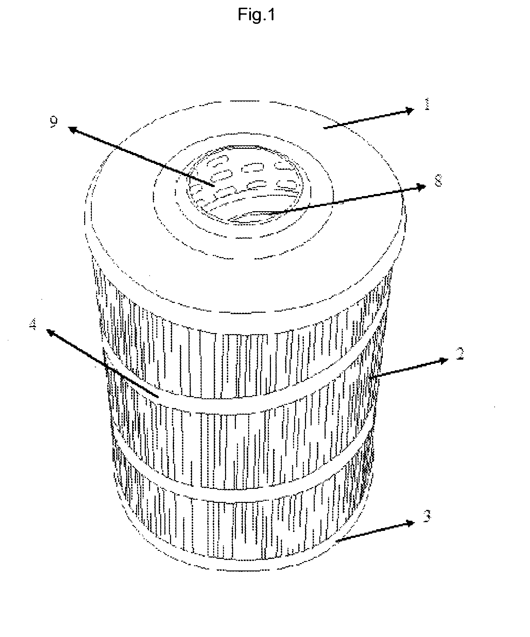

As shown in Fig.1, an environment protective and energy saving type filter element for diesel engine comprises an upper end cover 1, an accordion filter paper cylinder 2 and a bottom end cover 3, the upper end cover 1 and the bottom end cover 3 are stuck onto the two ends of the accordion filter paper cylinder 2, and a far infrared radiation energy saving strap 4, which is both energy-conserving, environment protective and capable of fixing filter paper, is twisted on the external surface of the accordion filter paper cylinder 2. A centric oil outlet 8 cooperated with the filter is located on the central part of the upper end cover 1. The accordion filter paper cylinder 2 is made up of evenly arranged sheet filter material, and a layer of metallic filter mesh 9 is provided on the internal surface of the accordion filter paper cylinder 2.

The filter element according to the embodiment can be installed and applied in the oil channel of a diesel internal combustion engine, mainly used to filter diesel oil flowing through. As setting this apparatus, the diesel oil is extracted from the centric oil outlet 8 of the upper end cover 1 after filtered by the accordion filter paper cylinder 2 of the filter element. The far infrared functional ceramic material twisted on the accordion filter paper cylinder 2 radiates efficiently far infrared that can activate the diesel oil molecules flowing through at ambient temperature, so as to refine the molecule cluster and improve combustion efficiency. The apparatus in the invention greatly reduces fuel consumption and exhaust emission; therefore it is energy-conserving and environment-protective.

### Example 2

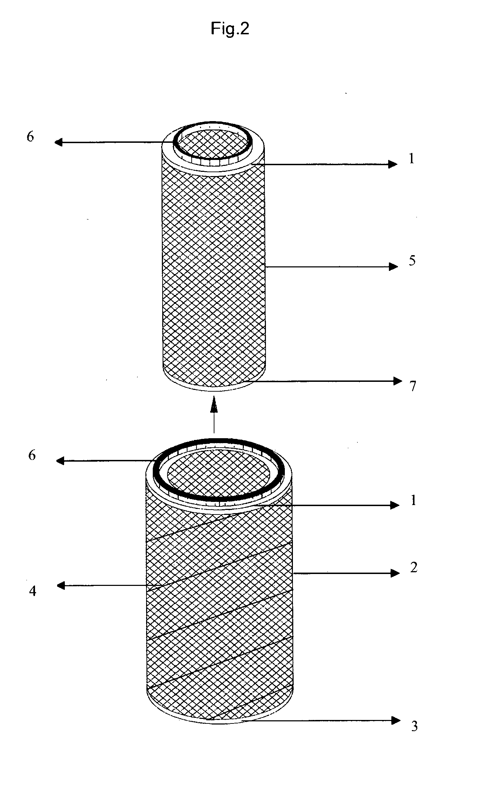

As shown in Fig.2, an environment protective and energy saving type filter for diesel engine comprises accordion filter paper cylinder 2 and inner filter cylinder 5 installed inside the accordion filter paper cylinder 2, wherein a far infrared radiation energy saving strap 4, which is both energy-conserving, environment protective and capable of fixing filter paper, is twisted on the external surface of the accordion filter paper cylinder 2. The accordion filter paper cylinder 2 filters the bigger contamination particles in the air and the inner filter cylinder 5 filters the smaller contamination particles in the air. An upper end cover 1, of which the top is stuck with a rubber ring 6, is provided on the top of the accordion filter paper cylinder 2. A bottom end cover 3, in the center of which a rounded mounting hole is set, is provided on the bottom of the accordion filter paper cylinder 2. A rubber ring 6 is stuck on the top of the inner filter cylinder 5 which has an inner bottom of the cylinder, in the center of which a rounded mounting hole is set. The rubber ring 6 is used as sealing ring for ensuring the air to pass through the filter paper. The rounded mounting hole permits the central pole to pass through to fix the filter to the vehicle filter bearing. The inner filter cylinder 5 and the accordion filter paper cylinder 2 are made up of evenly arranged sheet filter material, and each of the internal and external surface thereof is covered with a layer of metallic filter mesh.

The apparatus described in the embodiment can be applied in the air channel of a diesel internal combustion engine, mainly used to filter the air flowing through. As setting this apparatus, the larger contamination particles in the air are filtered by passing through the accordion filter paper cylinder 2 firstly, and then the smaller contamination particles in the air are filtered out by the inner filter paper cylinder 5, and the filtered air is discharged finally through the hole on the top end of the inner filter cylinder 5. The far infrared functional ceramic material twisted on the accordion filter paper cylinder 2 radiates efficiently far infrared that can activate oxygen molecules in the air flowing through at ambient temperature, so as to refine the molecule cluster, boost combustion and improve combustion efficiency, and thus reduces fuel consumption and exhaust emission.

### Example 3

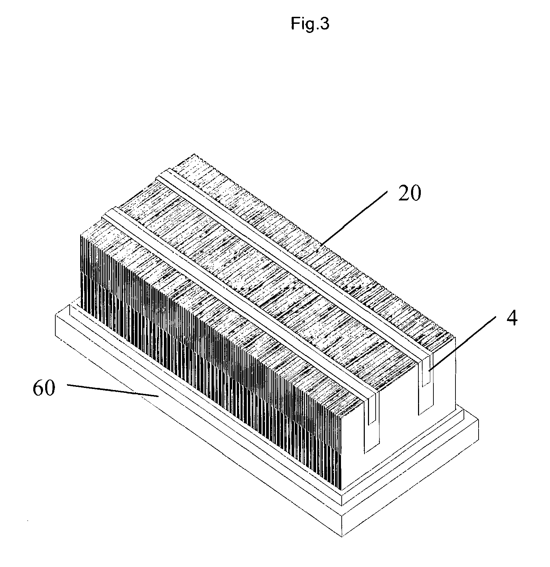

As shown in Fig.3, an environment protective and energy saving type filter apparatus for gasoline engine comprises a rectangular solid filter paper apparatus 20constructed by evenly arranged sheet filter material, and a far infrared radiation energy saving strap 4, which has functions of both energy-conserving, environment-protecting and filter paper-fixing, is twisted on the external surface of the filter paper apparatus 20, wherein four sides of one surface of the rectangular solid filter paper apparatus and the filter outlet are provided with a rubber ring 60, used to seal the filter apparatus in order to prevent the dust from coming into the engine.

The apparatus described in the embodiment can be applied in the oil channel of a gasoline engine, mainly used to filter the air flowing through. As setting this apparatus, the air is filtered by flowing through the rectangular solid filter paper apparatus and is drawn from the surface of the filter paper apparatus with the rubber ring. The far infrared functional ceramic material twisted on the rectangular solid filter paper apparatus radiates efficiently far infrared that can activate the air molecules flowing through at ambient temperature, so as to refine the molecule cluster, boost combustion and improve combustion efficiency, and thus reduces fuel consumption and exhaust emission; therefore it is energy-conserving and environment-protective.

### Example 4

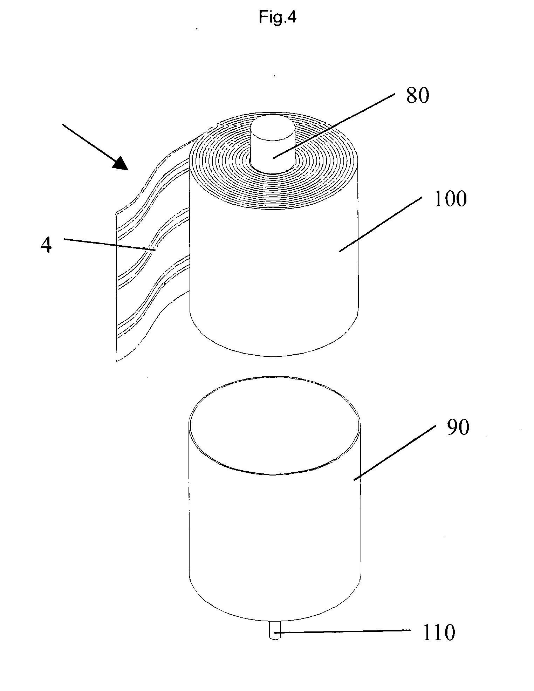

As shown in Fig.4, an environment protective and energy saving type filter apparatus for gasoline engine comprises filter paper apparatus 20, and a cylindrical shell 90 coating the filter paper apparatus 20. The filter paper apparatus 20 comprises filter paper 100 winding around a central axle hole 80, and the filter paper 100 overlaps a far infrared radiation energy saving strap 4, winding together around the central axle hole 80. An oil inlet 110 is provided on the cylindrical shell 90, and the gasoline flows into the filter paper apparatus 20 through the oil inlet 110 to be filtered.

The apparatus described in the embodiment can be applied in the oil channel of the gasoline engine, mainly used to filter the gasoline flowing through. As setting this apparatus, the gasoline flows into the filter paper apparatus 20 through the oil inlet 110 of the cylindrical shell 90 to be filtered by the filter paper apparatus 20. The far infrared functional ceramic material twisted on the rectangular solid filter paper apparatus radiates efficiently far infrared that can activate the fuel molecules flowing through at ambient temperature, so as to refine the molecule cluster, boost combustion and improve combustion efficiency, and thus reduces fuel consumption and exhaust emission; therefore it is energy-conserving and environment-protective.

### INDUSTRIAL APPLICABILITY

The merits and beneficial effects of the present invention include great reduction of vehicle fuel consumption and exhaust emission, environmental protection and fuel conservation. In addition, the apparatus according to the invention is simple and easy to operate.

## Claims

1. An environment protective and energy saving type filter apparatus for internal combustion engine, comprising a filter paper apparatus (20), a far infrared radiation energy saving strap (4) is provided on the filter paper apparatus (20)
**characterized in that**,
the filter paper apparatus (20) includes an accordion filter paper cylinder (2) with the far infrared radiation energy saving strap (4) twisted on the external surface thereof, and two ends of the accordion filter paper cylinder (2) are provided with an upper end cover (1) and a bottom end cover (3).

2. The environment protective and energy saving type filter apparatus for internal combustion engine of claim 1, **characterized in that** the accordion filter paper cylinder (2) is made up of evenly arranged sheet filter material, and a layer of metallic filter mesh (9) is covered on the internal surface of the accordion filter paper cylinder (2).

3. The environment protective and energy saving type filter apparatus for internal combustion engine of claim 1, **characterized in** further comprising an inner filter cylinder (5) installed inside of the accordion filter paper cylinder (2).

4. The environment protective and energy saving type filter apparatus for internal combustion engine of claim 3, **characterized in that** the inner filter cylinder (5) and the accordion filter paper cylinder (2) are made up of evenly arranged sheet filter material, and each of the internal and external surface thereof is covered with a layer of metallic filter mesh.

5. The environment protective and energy saving type filter apparatus for internal combustion engine of claim 1, **characterized in that** the filter paper apparatus (20) is constructed as a rectangular solid by evenly arranged sheet filter materials.

6. The environment protective and energy saving type filter apparatus for internal combustion engine of claim 5, **characterized in that** four sides of one surface of the filter paper apparatus (20) are provided with a rubber ring (60).

7. The environment protective and energy saving type filter apparatus for internal combustion engine of claim 1, **characterized in that** the filter paper apparatus (20) comprises filter paper (100) winding around a central axle hole (80), and the filter paper (100) overlaps the far infrared radiation energy saving strap (4), winding together around the central axle hole (80).

8. The environment protective and energy saving type filter apparatus for internal combustion engine of any one of claims 1-7, **characterized in that** the far infrared radiation energy saving strap (4) is divided into four layers, the outermost layer and the innermost layer are sealing layers, and two middle layers are a carrier layer and a functional layer mixed by far infrared tradition ceramic powder and binding agent, respectively.

9. The environment protective and energy saving type filter apparatus for internal combustion engine of claim 8, **characterized in that** the carrier layer is porous material including carbon-felt, activated carbon carbon-felt, high-temperature bamboo-charcoal carbon-felt, organic fiber product or porous aerated resin.

## Patentansprüche

1. Die Umwelt schützende und energiesparende Filtervorrichtung für einen Verbrennungsmotor, umfassend eine Filterpapiereinrichtung (20), wobei an der Filterpapiereinrichtung (20) ein energiesparendes Band (4) mit Fern-Infrarot-Strahlung angeordnet, **dadurch gekennzeichnet, dass** die Filterpapiereinrichtung (20) ein gefalztes Filterpapierrohr (2) ist, um dessen äußere Oberfläche das energiesparende Band (4) mit Fern-Infrarot-Strahlung gewunden ist, und wobei an beiden Enden des gefalzten Filterpapierrohrs (2) eine obere Endabdeckung (1) und eine untere Endabdeckung angeordnet sind.

2. Die Umwelt schützende und energiesparende Filtervorrichtung für einen Verbrennungsmotor nach Anspruch 1, **dadurch gekennzeichnet, dass** das gefalzte Filterpapierrohr (2) aus plattenförmigen Filtermaterialien besteht, die gleichmäßig verteilt sind, wobei die innere Oberfläche des gefalzten Filterpapierrohrs (2) mit einer Schicht aus einem metallischen Filternetz (9) abgedeckt ist.

3. Die Umwelt schützende und energiesparende Filtervorrichtung für einen Verbrennungsmotor nach Anspruch 1, **dadurch gekennzeichnet, dass** sie ferner ein inneres Filterrohr (5) aufweist, das im Inneren des gefalzten Filterpapierrohrs (2) angeordnet ist.

4. Die Umwelt schützende und energiesparende Filtervorrichtung für einen Verbrennungsmotor nach Anspruch 3, **dadurch gekennzeichnet, dass** das innere Filterrohr (5) und das gefalzte Filterpapierrohr (2) beide aus plattenförmigen Filtermaterialien bestehen, die gleichmäßig verteilt sind, wobei deren innere Oberfläche und äußere Oberfläche mit einer Schicht aus einem metallischen Filternetz (9) abgedeckt sind.

5. Die Umwelt schützende und energiesparende Filtervorrichtung für einen Verbrennungsmotor nach Anspruch 1, **dadurch gekennzeichnet, dass** die Filterpapiereinrichtung (20) durch die gleichmäßig verteilten Filtermaterialien als ein rechteckförmiger Festkörper ausgebildet ist.

6. Die Umwelt schützende und energiesparende Filtervorrichtung für einen Verbrennungsmotor nach Anspruch 5, **dadurch gekennzeichnet, dass** vier Kanten einer Oberfläche der Filterpapiereinrichtung (20) mit einem Gummiring (60) versehen sind.

7. Die Umwelt schützende und energiesparende Filtervorrichtung für einen Verbrennungsmotor nach Anspruch 1, **dadurch gekennzeichnet, dass** die Filterpapiereinrichtung (20) Filterpapier (100) umfasst, welches um ein entlang der Mittelachse verlaufendes Loch (80) gewickelt ist, wobei das Filterpapier (100) das energiesparende Band (4) mit Fern-Infrarot-Strahlung überlappt, und beide um das entlang der Mittelachse verlaufende Loch (80) gewickelt sind.

8. Die Umwelt schützende und energiesparende Filtervorrichtung für einen Verbrennungsmotor nach einem der Ansprüche 1 bis 7, **dadurch gekennzeichnet, dass** das energiesparende Band (4) mit Fern-Infrarot-Strahlung aus vier Schichten besteht, wobei die äußerste Schicht und die innerste Schicht Dichtungsschichten sind, und wobei die zwei mittleren Schichten eine Trägerschicht und eine Funktionsschicht sind, die entsprechend durch keramisches Fern-Infrarot-Pulver und Bindemitteln ausgebildet sind sind.

9. Die Umwelt schützende und energiesparende Filtervorrichtung für einen Verbrennungsmotor nach Anspruch 8, **dadurch gekennzeichnet, dass** die Trägerschicht ein poröses Material ist, umfassend Kohle-Filz, Aktivkohle-Filz, Hochtemperatur-Bambus-Kohlefilz, organisches Fasergewebe oder poröses geschäumtes Harz.

## Revendications

1. Un dispositif de filtration de protection de l'environnement et d'économie d'énergie pour un moteur à combustion, comprenant un appareil de papier-filtre (20), sur lequel une bande infrarouge à ondes longues d'économie d'énergie (4) est prévue, caractérisé en ce l'appareil de papier-filtre (20) comprend un papier-filtre cylindrique feuillé (2), la bande infrarouge à ondes longues d'économie d'énergie (4) s'enroulant autour la surface externe de celui-ci, et deux extrémités du papier-filtre cylindrique feuillé sont prévus d'un couvercle d'extrémité supérieur (1) et un couvercle d'extrémité inférieur (3).

2. Le dispositif de filtration de protection de l'environnement et d'économie d'énergie pour un moteur à combustion selon la revendication 1, **caractérisé en ce que** le papier-filtre cylindrique feuillé (2) est constitué d'un matériaux filtres en feuille distribué uniformément, et la surface interne du papier-filtre cylindrique feuillé (2)est recouverte d'une couche de filtre à mailles métallique (9).

3. Le dispositif de filtration de protection de l'environnement et d'économie d'énergie pour un moteur à combustion selon la revendication 1, **caractérisé en ce qu'**il comprend un filtre cylindre interne (5) installé à l'interieur du papier-filtre cylindrique feuillé (2).

4. Le dispositif de filtration de protection de l'environnement et d'économie d'énergie pour un moteur à combustion selon la revendication 3, **caractérisé en ce que** le filtre cylindrique interne (5) et le papier-filtre cylindrique feuillé (2) sont constitués d'un matériaux filtres en feuille distribué uniformément, et chacune de leurs surfaces internes et externes est recouverte d'une couche de filtre à mailles métalliques.

5. Le dispositif de filtration de protection de l'environnement et d'économie d'énergie pour un moteur à combustion la revendication 1, **caractérisé en ce que** l'appareil de papier-filtre (20) est realisé sous la forme d'un solide rectangulaire par des matériaux filtres en feuille distribués uniformément.

6. Le dispositif de filtration de protection de l'environnement et d'économie d'énergie pour un moteur à combustion selon la revendication 5, **caractérisé en ce que** les quatres côtés d'une surface de l'appareil de papier-filtre (20) sont prévues d'un caoutchouc (60).

7. Le dispositif de filtration de protection de l'environnement et d'économie d'énergie pour un moteur à combustion selon la revendication 1, **caractérisé en ce que** l'appareil de papier-filtre (20) inclut papier-filtre (100) qui s'enroule autour d'un trou d'essieu central (80), et le papier-filtre (100) enchevauche la bande infrarouge à ondes longues d'économie d'énergie (4), les deux s'enroulant autour le trou d'essieu central (80).

8. Le dispositif de filtration de protection de l'environnement et d'économie d'énergie pour un moteur à combustion selon l'une quelconque des revendications 1 à 7, **caractérisé en ce que** la bande infrarouge à ondes longues d'économie d'énergie (4) se compose de quatre couches, la couche la plus intérieure et la couche la plus extérieur étant couches d'étanchéité, et les deux couches intermédiaires sont une couche de support et une couche fonctionnelle respectivement, mélangee par poudre céramique infrarouge à ondes longues et agglutinant.

9. Le dispositif de filtration de protection de l'environnement et d'économie d'énergie pour un moteur à combustion selon la revendication 8, **caractérisé en ce que** la couche de support est une matiere poreuse comprenant du charbon-feutre, du charbon-feutre activé, du bambou charbon feutre à haute température, des tissues fibres organiques ou de la résine aérée poreuse.
